# EUROPÄISCHE PATENTSCHRIFT

(11) **EP 0 490 359 B1**
(45) Veröffentlichungstag und Bekanntmachung des Hinweises auf die Patenterteilung: **20.07.1994**
(21) Anmeldenummer: 91121252.0
(22) Anmeldetag: 11.12.1991
(51) Int. Cl.: B29C 47/64, B29C 47/66, B29C 47/76

(54) **Entgasungsextruder**
Extruder with a vent zone
Extrudeuse à zone de dégazage

(30) Priorität: 14.12.1990 DE 4039942; 29.04.1991 US 693224
(43) Veröffentlichungstag der Anmeldung: 17.06.1992
(73) Patentinhaber: HERMANN BERSTORFF Maschinenbau GmbH, D-30627 Hannover (Kleefeld) (DE)
(72) Erfinder: Capelle, Gerd, Dipl.-Ing., W-3012 Langenhagen 6 (DE)

(56) Entgegenhaltungen:
- EP-A- 0 102 400
- EP-A- 0 336 702
- DE-A- 1 909 818
- DE-C- 3 744 193
- GB-A- 1 510 261
- US-A- 3 613 160
- US-A- 3 685 804
- PATENT ABSTRACTS OF JAPAN vol. 7, no. 187 (M-236)(1332) 16. August 1983
- INDUSTRIAL AND PRODUCTION ENGINEERING. Bd. 12, Nr. 3, Oktober 1988, MUNCHEN DESeiten 16 - 19; H. WOBBE: 'COMPARISON OF THE DEGASSING EFFICIENCIES OF ASINGLE-SCREW AND TWIN-SCREW EXTRUDERS'
- Prospekt der Firma RCM, "MCT-EXTRUDER-SYSTEM", 11/86

## Beschreibung

Die Erfindung betrifft einen Einschnecken-Entgasungsextruder.

Bei der Herstellung von thermoplastischen Kunststoffen besteht häufig das Bedürfnis, Restmonomere aus dem Ausgangskunststoff zu entfernen. Soll beispielsweise eine Verpackungsfolie für Lebensmittel aus Polystyrol extrudiert werden, so darf aus lebensmittelrechtlichen und damit aus medizinischen Gründen der Anteil von gesundheitlich schädlichen Restmonomeren einen bestimmten Grenzwert nicht übersteigen. Da das üblicherweise in einem Extruder einzuspeisende Polystyrol einen Anteil von bis zu 100.000 ppm monomeres Styrol aufweist, bedarf es einer sehr effektiven Entgasungsvorrichtung, um den um etwa zwei Zehnerpotenzen niedrigeren Grenzwert für Restmonomere im Produkt erreichen zu können.

Zur Entgasung von derartigen Kunststoffen ist aus der US-A-4,094,942 ein Einschneckenextruder zum Entgasen von thermoplastischem Kunststoff bekannt. Bei diesem Extruder verfügt die Extruderschnecke in einem dem Einzugsbereich nachgeordneten Abschnitt über zwei Druckblenden, die von einem eine Mischwirkung erzeugenden Schneckenabschnitt beabstandet sind. Stromab der ersten Druckblende weist der Extruder eine Einspritzöffnung für ein in das Extrudat einspritzbares Schleppmittel auf, welches mit der Kunststoffschmelze im Extruder vermischbar ist. Dieses Schleppmittel (in der Regel Wasser) sorgt dann in einem der Mischzone stromabwärts nachgeordneten Entgasungsbereich dafür, daß die Schmelze bei einer Druckabsenkung aufschäumt. Die durch die Schaumblasen verursachte Vergrößerung der freien Oberfläche der Schmelze bewirkt eine für weite Anwendungsbereiche ausreichende Entgasung der Schmelze.

Aus der DE-C-37 44 193 ist ein Entgasungsextruder bekannt, bei dem aufgrund eines erfaßten Druckgradienten die Füllhöhe der Schmelze in den einzelnen Extruderabschnitten gesteuert wird.

Zudem ist aus der US-A-3,613,160 bekannt, Extruder mit Drosselbauteilen zu versehen, mit denen der Extrudattransport im Extruder variabel von außen gesteuert werden kann. Gemäß dieser Druckschrift ist dazu auf dem Schneckenschaft der Extruderschnecke ein in etwa zylindrisches Bauteil angeordnet, das mit der Schnecke mitrotiert und den Verarbeitungsraum stromab vollständig versperrt. Im Bereich dieses zylindrischen Bauteils sind durch das Extrudergehäuse von außen zwei Drosselstifte radial in jeweils einen axial ausgerichteten Überströmkanal geführt, der in die Innenwand des Extrudergehäuses hineingearbeitet ist.

Bei zurückgezogenen Drosselstiften kann ein Teil des sich stromauf des zylindrischen Bauteils befindlichen Extrudates durch diese Kanäle zum stromabwärtigen Extruderteil gelangen. Durch unterschiedlich tiefes hineinfahren der Drosselstifte in diese Überströmkanäle, läßt sich dieser Extrudatstrom begrenzen.

Die mit solchen Einschneckenextrudern erzielbaren Restmonomeranteile im Produkt reichen aber für viele Gebiete nicht aus, insbesondere dann nicht, wenn die Kunststoffprodukte beispielsweise mit Lebensmitteln direkt in Kontakt geraten.

Außerdem ist aus der EP-A-0 102 400 der Anmelderin bekannt, daß es bei der Entgasung von Kautschukmischungen dann problematisch ist, ein möglichst druckloses Fördern des Extrudates im Entgasungsabschnitt aufrecht zu erhalten, wenn das Mischteil des Extruders mit hoher Förderleistung arbeitet und zudem das dem Extruder nachgeordnete Extrusionswerkzeug einen hohen Werkzeuggegendruck erzeugt.

Gemäß dieser Druckschrift wird zur Lösung dieses Problems vorgeschlagen, den Durchmesser des Extruders in der Entgasungs- und Austragszone gegenüber dem in der Mischzone um 10 bis 30 % zu erhöhen. Dadurch steht dem Extrudat erheblich mehr Volumen im Verarbeitungsraum des Extruders zur Verfügung, so daß auch bei hoher Förderleistung und starkem Werkzeuggegendruck optimal entgast werden kann.

Nachteilig bei diesem Extruder ist aber dennoch, daß er nur für einen vergleichsweise engen Bereich von Kautschukmischungen und Werkzeuggegendrücken verwendbar ist. Bei stärkeren Abweichungen vom Auslegungswert des Extruders muß eine schlechtere Entgasungsleistung und/oder eine geringere Ausstoßleistung in Kauf genommen werden. Abhilfe schafft lediglich eine Anpassung der Extruderschnecke an die anderen, ggf. stark abweichenden o.g. Extrusionsbedingungen.

Aus der JP-A-58-89341 ist bekannt, durch die Wandung eines Extruderzylinders radial Mischstifte zu führen, um eine bessere Mischwirkung zu erzielen.

Weiterhin ist aus der US-A-3,685,804 ein in der Fachwelt als Transfermischextruder bezeichneter Extruder bekannt, der eine Entgasungsöffnung mit einer daran angeschlossenen Vacuumpumpe aufweist.

In einem Prospekt der Fa. RCM vom November 1986 wird eine Extruderschnecke mit Stiften und einem Drosselorgan am Ende des Extruders erwähnt. In diesem Prospekt werden zwei sehr unterschiedliche Extrusionssysteme, nämlich Plastifizier-Extruder mit und ohne Stifte und das sogenannte "MCT-System" miteinander verglichen. Hinweise für eine Kombination beider Extrudersysteme sind aus diesem Prospekt nicht entnehmbar.

Außerdem ist aus dem Prospekt der Fa. RCM vom November 1986 ein Vakuum-Extruder mit einem Einzug, einem Plastifizierungsteil, einem Überströmteil, einer drucklosen Zone für die Entgasung und einer Förderschnecke mit Druckaufbau bekannt.

Der Erfindung liegt die Aufgabe zugrunde, einen Einschneckenextruder zum effektiveren Entgasen von thermoplastischen Kunststoffen und Kautschukmischungen vorzustellen. Dabei sollte der Entgasungsbereich des Extruders derart aufgebaut sein, daß in Abhängigkeit von den spezifischen Eigenschaften des Extruders und des Werkzeuggegendruckes die optimalen Bedingungen zur Einmischung des Schleppmittels bzw. die optimalen Entgasungsbedingungen ohne großen Aufwand einstellbar sind.

Diese Aufgabe wird gemäß der Erfindung mit dem Einschnecken entgasungsextruder nach Anspruchs 1 gelöst. Vorteilhafte Weiterbildungen und Ausgestaltungen der Erfindung sind den Unteransprüchen zu entnehmen.

Der Erfindung liegt bezüglich der Kunststoffentgasung die Erkenntnis zugrunde, daß eine optimale Entgasung der Schmelze nur dann möglich ist, wenn das Schleppmittel vollständig und homogen in der Schmelze vermischt wurde. Nur so läßt sich im Entgasungsbereich des Extruders die Schmelze unter möglichst starker Blasenbildung derart stark entgasen, daß die lebensmittelrechtlichen Grenzwerte eingehalten werden können.

Um diese vollständige Vermischung des Schleppmittels mit der Schmelze erreichen zu können, bedarf es einer Erhöhung des Schmelzedruckes auf einen Wert, der über dem spezifischen Verdampfungsdruck des eingesetzten Schleppmittels liegt. Ist dieser erreicht, lassen sich das Schleppmittel und die Schmelze in flüssiger Phase leicht miteinander vermischen und anschließend unter der Entgasungsöffnung des Extruders unter starker Blasenbildung entspannen. Auf diese Art und Weise wird die Schmelze fast vollständig entgast.

Um mit dem gleichen Extruder wahlweise verschiedene Kunststoffe mit unterschiedlichen Schleppmitteln entgasen zu können, bedarf es einer Drucksteuerungsmöglichkeit für das Extrudat in der Mischzone des Extruders. Dabei ist es unerheblich, ob das Schleppmittel in flüssiger Form in den Extruder eingespritzt oder bereits in fester oder flüssiger Form dem Extruder zusammen mit dem Kunststoff zugeführt wird.

Diese Erkenntnis wurde in einen Einschnecken Entgasungsextruder umgesetzt, bei dem einer Einfüllöffnung für das Extrudat eine Einzugszone sowie eine Stiftzylindermischzone nachgeordnet ist. Die Einspritzstelle für das Schleppmittel befindet sich in einer vorteilhaften Ausführungsform am Anfang dieser Stiftzylinderzone, wodurch mit den in den Verarbeitungsraum hineinragenden Extruderstiften schon in diesem Bereich ein erstes Einmischen des Schleppmittels erreichbar ist.

Dem Stiftzylinderbereich ist ein Transferbereich nachgeordnet, der im wesentlichen dadurch gekennzeichnet ist, daß sowohl die Extruderschnecke als auch die Innenwand des Extrudergehäuses über eine bestimmte Länge mit Nuten und Stegen versehen ist, wobei in Längsrichtung des Extrudergehäuses die Gangtiefe der Extruderschnecke in dem gleichen Maß bis auf Null abnimmt und anschließend wieder anwächst, wie die Gangtiefe der Gehäusenuten zunimmt bzw. wieder abnimmt. Durch diese Ausbildung von Extruderschnecke und -gehäuse wird ein bei rotierendem Mischteil vollständiger Extrudataustausch zwischen den Schneckennuten und den Gehäusenuten möglich, was eine gute Mischwirkung verursacht.

Durch die Anordnung von verstellbaren Drosselstiften, die in dem Teil des Transferbereichs des Extrudergehäuses radial hineinragen, in dem die Gehäusegänge in etwa ihr größtes Gangvolumen aufweisen, läßt sich der vorgeschlagene Extruder für die Verarbeitung von unterschiedlichen Kunststoffen einstellen. Mit der Eindringtiefe der Drosselstifte in die Gehäusegänge und den Verarbeitungsraum des Extruders, kann somit die Mischleistung des Extruders und der Schmelzedruck des Extrudats beliebig und mischungsbezogen vorgewählt werden.

Neben der Verwendung als Kunststoffentgasungsextruder ist sein Einsatz auch als Kautschukentgasungsextruder außerordentlich vorteilhaft. Dabei kann der Rohkautschuk über Gehäuseöffnungen im Extruder mit seinen Mischungskomponenten versehen werden, die anschließend in den stark förderaktiven Stiftzylinderbereich eingemischt werden. Mit Hilfe des Transferbereiches des Extruders wird die Kautschukmischung weiter homogenisiert, wobei die Drosselstifte in den Gehäusegängen einerseits die Mischleistung und andererseits die Förderleistung des Extruders variieren können. Auf diese Weise ist es möglich, unabhängig von der eingesetzten Kautschukmischung und dem den Extruder nachgeschalteten Extrusionswerkzeug den Füllgrad im Entgasungsabschnitt optimal konstant zu halten.

Mit Hilfe wenigstens je eines Drucksensors 19,20 am Ende des Stiftzylinderbereiches und im Druckerhöhungsbereich 10 oder im Entgasungsbereich 25 sowie einem Prozeßrechner 27, können zudem bei Schwankungen des Werkzeuggegendruckes und der Förderleistung des Extruders die optimale Eindringtiefe der Drosselstifte 17 in die Gehäusegänge des Transferbauteils errechnet werden und die Stellvorrichtungen 28 dieser Drosselstifte entsprechend aktiviert werden. Schließlich ist mit diesen Vorrichtungsgegenständen eine schnelle Anpassung des Extruders an unterschiedliche Extrudate und Werkzeugköpfe möglich

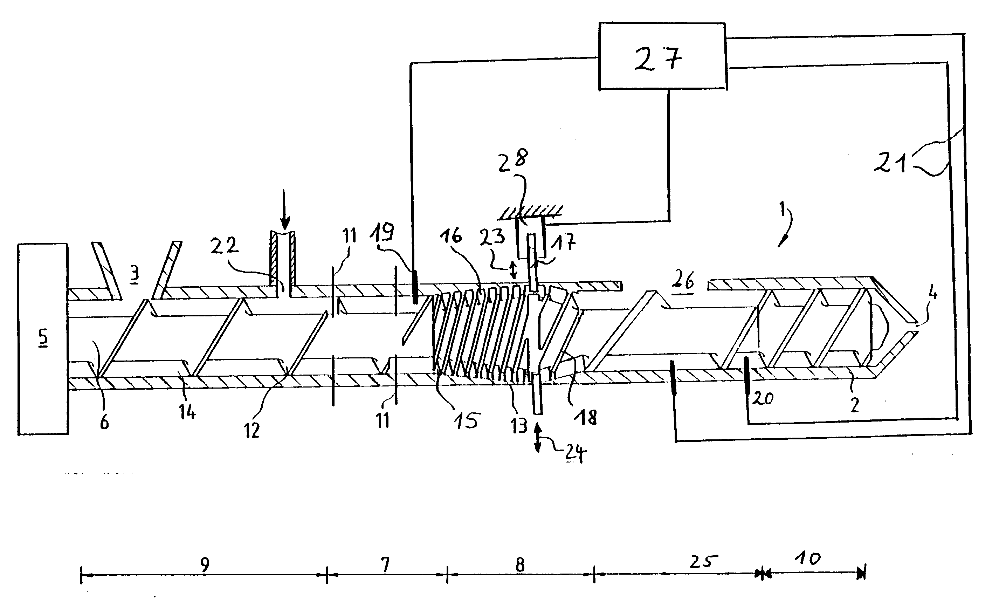

Die Erfindung läßt sich anhand von Ausführungsbeispielen und mit Hilfe der Zeichnung erläutern. Sie zeigt einen Längsschnitt durch einen Einschnecken-Entgasungsextruder 1 mit Drosselstiften 17 im Transferteil 8.

Innerhalb des Extrudergehäuses 2 ist eine Extruderschnecke 6 angeordnet, die von einer Antriebseinheit 5 um ihre Längsachse antreibbar ist. Das Gehäuse 2 hat im Bereich seines stromaufwärtigen Endes eine Einfüllöffnung 3 für das zu extrudierende Material, welches den Extruder fertig plastifiziert und entgast durch die Auslaßöffnung 4 verläßt.

Die Extruderschnecke 6 weist im Einzugsbereich 9 eine Schneckengeometrie auf, die dazu geeignet ist, in an sich bekannter Weise das durch die Einfüllöffnung 3 zugeführte Material in den Extruder einzuziehen und zu plastifizieren.

Stromabwärts dieses Einzugsbereiches 9 vor einem Stiftzylinderbereich 7, ist eine Einspritzöffnung 22 für ein Schleppmittel oder Kautschuk-Mischungskomponenten vorgesehen, wenngleich diese auch in fester oder flüssiger Form durch die Einfüllöffnung 3 in den Extruder einbringbar sind.

Alternativ kann die Einspritzöffnung 22 auch stromab des Stiftzylinderbereiches 7 vor dem sich daran anschließenden Transferbereiches 8 angeordnet sein.

Im Stiftzylinderbereich 7 sind in an sich bekannter Weise in diesem Ausführungsbeispiel zwei oder mehr Reiher von Stiften 11 radial durch das Extrudergehäuse 2 in Richtung Schneckenachse in den Verarbeitungsraum 14 des Extruders hineinragend angeordnet. In diesem Bereich 7 sind die Schneckenstege 12 in bekannter Weise in der Stiftebene durchbrochen, um ein Kollidieren mit den Stiften 11 zu vermeiden.

Stromab des Stiftzylinderbereiches 7 ist ein Transferbereich 8 angeordnet, in dem die Schnecke 6 und das Gehäuse 2 als Mischteil ausgebildet gebildet sind.

Außerdem sind die Extruderschnecke und das Extrudergehäuse in diesem Transferbereich 8 so ausgebildet, daß unabhängig von den zu- bzw. abnehmenden Schnecken- und Gehäusegangquerschnittsflächen im Einlaufbereich und Auslaufbereich des Transferbereiches 8 die Anzahl der Schneckenstege und der Gehäusestege konstant bleibt.

Im Gegensatz zu den Schneckengängen 15 sind die Gehäusegänge 16 im Transferteil 8 nicht unterbrochen. Sie winden sich vielmehr kontinuierlich und stetig von der Einlaufzone des Transferteils bis zu seiner Auslaufzone in etwa zu- bzw. abnehmend spiralförmig um die gedachte Längsachse des Extruders.

Im Einlaufbereich des Transferteiles 8 wächst der Schneckenkerndurchesser von der max. Gangtiefe bis auf den Außendurchmesser, d.h. das Gangvolumen der Schnecke 6 fällt vom Maximalwert im Einlaufbereich bis auf Null. Die Gangvolumina des Gehäuses 2 weisen die umgekehrte Tendenz auf. Somit wird das für das Extrudat effektiv vorhandene Durchtrittsvolumen in axialer und radialer Transportrichtung konstant gehalten. Zwangsläufig findet auf Grund dieser Gegebenheiten ein hundertprozentiger Extrudataustausch zwischen den Schneckengängen 15 und den Gehäusegängen 16 statt.

Im Austrittsbereich des Transferteils 8 nimmt das Gangvolumen der Schnecke 6 kontinuierlich zu und bei den Gehäusegängen 16 kontinuierlich ab, wobei wiederum das für das Extrudat vorhandene Gesamtgangvolumen von Schnecke und Gehäuse bzw. Buchse Konstant gehalten wird.

Am Ende des ersten Abschnitts der Transferzone 8 befindet sich in dieser Ausführungsform ein Drosselelement, welches symmetrisch am Umfang verteilte Stifte 17 aufweist, die radial in die nicht unterbrochenen Gehäusegänge 16 eintauchen und das Gangvolumen in diesem Bereich vom Maximalwert bis auf Null reduzieren können.

Mit diesen Drosselstiften 17, die von außen über die Stellvorrichtungen 28 in Richtung der Pfeile 23,24 entweder manuell oder hydraulisch verfahrbar sind, kann die Mischwirkung des Extruders und der Extrudatdruck beliebig in Abhängigkeit von den spezifischen Extrudateigenschaften sowie vom Werkzeuggegendruck gesteuert werden.

Dem Transferbereich 8 ist ein Entgasungsbereich 25 stromab nachgeordnet. In diesem Bereich 25 wird das Extrudat bzw. Extrudat/Schleppmittelgemisch entspannt, so daß es sich unter starkem Aufschäumen seiner flüchtigen Bestandteile weitgehend entledigen kann.

Die Extruderschnecke 6 weist in dem Entgasungsbereich 25 eine stark verminderte Gangzahl auf, so daß in an sich bekannter Weise zusätzlicher Raum für die Extrudatexpansion zur Verfügung steht.

Die zu entgasenden Stoffe können den Extruder über eine Entgasungsöffnung 26 verlassen, an die auch eine nicht dargestellte Absaugeinrichtung anschließbar ist.

Das letzte Verfahrensteil des Extruders 1 wird durch einen Druckerhöhungsbereich 10 gebildet, in dem die Schneckengeometrie so gewählt ist, das in bekannter Weise der Extrudatdruck auf den notwendigen Werkzeugdruck anhebbar ist.

## Patentansprüche

1. Einschneckenentgasungsextruder für thermoplastischen Kunststoff und Kautschuk bestehend aus einem Extrudergehäuse (2) mit einer Einlaß- und einer Auslaßöffnung (3, 4) sowie einem Antrieb (5) für eine im Verarbeitungsraum (14) des Gehäuses (2) um ihre Längsachse drehbar angeordnete Extruderschnecke (6) wobei der Extruder (1) über zwei hintereinander angeordnete Misch- und Homogenisierbereiche (7, 8,) verfügt, wobei der eine Bereich als Stiftzylinderbereich (7) mit radial in den Verarbeitungsraum (14) des Gehäuses (2) hineinragenden Stiften (11) und in dem Bereich der Stifte (11) unterbrochenen Schneckenstegen (12) ausgebildet ist, wobei der andere Bereich als Transferbereich (8) ausgelegt ist, in dem die Extruderschnecke (6) von einem Einlaufbereich zu einem Auslaufbereich eine stetige Verringerung ihres Gangvolumens bis auf Null und dann eine Gangvolumenvergrößerung bis auf einen Maximalwert aufweist, und in dem das Extrudergehäuse (2) über ununterbrochene Gehäusegänge verfügt, die von dem Einlaufbereich zum Auslaufbereich des Transferteils hin ihr Gangvolumen von Null auf einen Maximalwert vergrößern, um anschließend wieder auf ein Gangvolumen von Null abzufallen, und in dem die Gehäusegänge in etwa wendelförmig um eine gedachte Extruderlängsachse geführt sind, wobei im Bereich des maximalen Gangvolumens der Gehäusegänge radial verstellbare Drosselstifte (17) durch das Gehäuse (2) in die Gehäusegänge (16) sowie in den Verarbeitungsraum (14) hineinragbar angeordnet sind, und daß dem Transferbereich (8) ein Entgasungsbereich (25) und ein Druckerhöhungsbereich (10) stromab nachgeordnet sind, wobei im Entgasungsbereich (25) die Extruderschnecke (6) eine reduzierte Gangzahl und das Extrudergehäuse (2) eine Entgasungsöffnung (26) aufweist.

2. Extruder gemäß Anspruch 1, wobei der Stiftzylinderbereich (7) stromaufwärts vor dem Transferbereich (8) angeordnet ist.

3. Extruder gemäß Anspruch 1, wobei im Extrudergehäuse (6) vor dem Transferbereich (8) eine Schleppmittel-Einspritzöffnung (22) vorgesehen ist, die vorzugsweise vor dem Stiftzylinderbereich (7) angeordnet ist.

4. Extruder gemäß Anspruch 3, wobei bei einer vorzugsweisen Extruderlänge von 10 Schneckendurchmessern D der Einzugsbereich (9) 3 D, der Stiftzylinderbereich (7) 1,5 bis 2 D, der Transferbereich (8) bis 2,5 D und der Druckerhöhungsbereich (10) etwa 3 D lang ist.

5. Extruder gemäß den Ansprüchen 1 bis 4, wobei im Stiftzylinderbereich (7) vorzugsweise ein bis fünf radiale Reihen Stifte (11) angeordnet sind.

6. Extruder gemäß den Ansprüchen 1 bis 5, wobei wenigstens ein Drosselstift (17) pro Gehäusegang vorgesehen ist, und wobei die verstellbaren Drosselstifte (17) über die gesamte Gehäusegangtiefe und bis dicht über die Schneckenoberfläche absenkbar sind.

7. Extruder gemäß den Ansprüchen 1 und 6, wobei die Drosselstifte (17) über mechanisch, pneumatisch oder hydraulisch betätigbare Stellvorrichtungen radial verstellbar sind.

8. Extruder gemäß den Ansprüchen 1 und 7, wobei Drucksensoren (19;20) am Ende des Stiftzylinderbereiches (7) und/ oder im Druckerhöhungsbereich (10) in den Verarbeitungsraum ragen, die über Datenleitungen (21) mit einem Rechner (27) und den Stellvorrichtungen (28) für die Drosselstifte (17) verbunden sind.

## Claims

1. Single-screw degassing extruder for thermoplastic polymers and rubber, comprising an extruder housing (2) with an inlet and an outlet opening (3, 4), as well as a drive unit (5) for an extruder screw (6) that is arranged in the processing chamber (14) of the housing (2) such as to allow its rotation about its longitudinal axis,
the extruder (1) being provided with two mixing and homogenizing sections (7, 8) arranged one behind the other,
one section of which is designed as pin barrel section (7) with pins (11) projecting radially into the processing chamber (14) of the housing (2) and the screw flights (12) being interrupted in the area of the pins (11),
the other section being designed as convert section (8), in which the extruder screw (6) has a channel volume that is continuously reduced down to zero from an inlet zone to an outlet zone and subsequently increased to the maximum value, and in which the extruder housing (2) is provided with non-interrupted housing flights, the channel volume of which continuously increases from zero to a maximum value from the inlet zone to the outlet zone and subsequently decreases again to zero, and in which the housing channels are led in the form of a spiral around an imaginary longitudinal extruder axis,
radially adjustable throttle pins (17), which project through the housing (2) into the housing channels (16) as well as into the processing chamber (14), being arranged in the area of the housing flights that present the maximum channel volume, and
the convert section (8) being followed by a degassing section (25) and a pressure build-up section (10), with the extruder screw (6) presenting a reduced number of channels in the degassing section (25) and the extruder housing (2) being provided with a degassing opening (26).

2. Extruder as recited in claim 1,
with the pin barrel section (7) being arranged upstream of the convert section (8).

3. Extruder as recited in claim 1,
with the extruder housing (2) being provided upstream of the convert section (8) with an injection opening (22) for stripping agents, which is preferably arranged upstream of the pin barrel section (7).

4. An extruder as recited in claim 3,
with the intake section (9) presenting a length of 3 D, the pin barrel section (7) a length of 1.5 to 2 D, the convert section (8) a length of up to 2.5 D, and the pressure build-up section (10) a length of approximately 3 D given a preferred extruder length of 10 screw diameters D.

5. An extruder as recited in claims 1 to 4,
with the pin barrel section (7) being preferably provided with one to five radial rows of pins (11).

6. An extruder as recited in claims 1 to 5,
comprising at least one throttle pin (17) per housing channel and in which the adjustable throttle pins (17) can be lowered over the entire housing flight depth almost closely down to the screw surface.

7. An extruder as recited in claims 1 and 6,
the throttle pins (17) of which can be radially adjusted by means of mechanical, pneumatic or hydraulic adjusting devices.

8. An extruder as recited in claims 1 and 7,
with pressure sensors (19, 20) projecting into the processing chamber at the end of the pin barrel section (7) and/or in the pressure build-up section (10), which are connected via data lines (21) to a computer (27) and to the adjusting devices (28) for the throttle pins (17).

## Revendications

1. Extrudeuse de dégazage monovis pour les thermoplastiques et le caoutchouc comprenant un carter d'extrudeuse (2) avec une ouverture d'entrée et une ouverture de sortie (3, 4) et un entraînement (5) pour une vis d'extrudeuse (6) qui peut être tournée autour de son axe longitudinal dans la chambre de transformation (14) du carter (2),
l'extrudeuse (1) étant pourvue de deux parties de mélangeage et d'homogénéisation (7, 8) arrangées l'une derrière l'autre, l'une des parties étant conçue comme partie de cylindre à picots (7) avec des picots (11) pénétrant radialement dans la chambre de transformation (14) du carter (2) et avec des filets de vis (12) intérrompus au niveau des picots (11), l'autre partie étant conçue comme partie Convert (8), dans laquelle la vis d'extrudeuse (6) présente d'une zone d'entrée jusqu'à une zone de sortie une réduction continue du volume de filet jusqu'à zéro suivie d'une augmentation du volume de filet jusqu'à une valeur maximale, et dans laquelle le carter d'extrudeuse (2) est pourvu de filets de carter ininterrompus qui, de la zone d'entrée jusqu'à la zone de sortie de la partie Convert, agrandissent leur volume de filet de zéro jusqu'à une valeur maximale et diminuent ensuite leur volume de filet jusqu'à zéro et dans laquelle les filets de carter vont en spirale autour d'une axe longitudinale théorique de l'extrudeuse, des picots d'étranglement (17) ajustables radialement étant arrangés au niveau du volume maximal des filets de carter qui peuvent pénétrer à travers le carter (2) dans les filets de carter (16) ainsi que dans la chambre de transformation (14) et
la partie Convert (8) étant suivie d'une partie de dégazage (25) et d'une zone de montée en pression (10), la vis d'extrudeuse (6) étant pourvue d'un nombre de filets réduit et le carter d'extrudeuse (2) étant équipé d'une ouverture de dégazage (26) dans la partie de dégazage (25).

2. Extrudeuse selon revendication 1, la partie de cylindre à picots (7) étant arrangée en amont de la partie Convert (8).

3. Extrudeuse selon revendication 1, le carter d'extrudeuse (2) étant équipé en amont de la partie Convert (8) d'une ouverture pour l'injection de l'agent d'entraînement (22) qui est arrangée de préférence en amont de la partie de cylindre à picots (7).

4. Extrudeuse selon revendication 3, la longueur de la partie d'alimentation (9) étant 3 D, de la partie de cylindre à picots (7) 1,5 à 2 D, de la partie à Convert (8) jusqu'à 2,5 D et de la zone de montée en pression (10) environ 3 D dans le cas d'une longueur d'extrudeuse préférée de 10 diamètres de vis D.

5. Extrudeuse selon les revendications 1 à 4, la partie de cylindre à picots (7) comprenant de préférence une à cinq rangées de picots radiales (11).

6. Extrudeuse selon les revendications 1 à 5, au moins un picot d'étranglement (17) étant prévu par filet de carter et les picots d'étranglement (17) ajustables pouvant être baissés sur toute la profondeur de filet du carter et près de la surface de vis.

7. Extrudeuse selon les revendications 1 et 6, des picots d'étranglement (17) étant ajustables radialement au moyen de dispositifs d'ajustage mécanique, pneumatique ou hydraulique.

8. Extrudeuse selon les revendication 1 et 7, les capteurs de pression (19, 20) pénétrant à la fin de la partie de cylindre à picots (7) et/ou dans la zone de montée en pression (10) dans la chambre de transformation et étant réliés par des lignes de transmission de données (21) avec un ordinateur (27) et avec les dispositifs d'ajustage (28) pour les picots d'étranglement (17).
